# EUROPÄISCHE PATENTSCHRIFT

(11) **EP 1 232 599 B1**
(45) Veröffentlichungstag und Bekanntmachung des Hinweises auf die Patenterteilung: **15.07.2009**
(21) Anmeldenummer: 00964047.5
(22) Anmeldetag: 28.08.2000
(51) Int. Cl.: H04L 1/24

(54) **ANORDNUNG ZUM ERZEUGEN EINES DIGITAL MODULIERTEN PRÜFSIGNALS**
DEVICE FOR GENERATING A DIGITALLY MODULATED TEST SIGNAL
DISPOSITIF POUR GENERER UN SIGNAL DE CONTROLE MODULE NUMERIQUEMENT

(30) Priorität: 26.11.1999 DE 19957093
(43) Veröffentlichungstag der Anmeldung: 21.08.2002
(73) Patentinhaber: Rohde & Schwarz GmbH & Co. KG, 81671 München (DE)
(72) Erfinder: KERNCHEN, Wolfgang, 82054 Sauerlach (DE); BRAUNSTORFINGER, Thomas, 80796 München (DE)
(74) Vertreter: Körfer, Thomas
(86) Internationale Anmeldenummer: PCT/EP2000/008387
(87) Internationale Veröffentlichungsnummer: WO 2001/039425

(56) Entgegenhaltungen:
- US-A- 5 761 216
- US-A- 5 812 558

## Beschreibung

Die Erfindung geht aus und betrifft eine Anordnung laut Oberbegriff des Hauptanspruches.

Für Meßzwecke werden oftmals digital modulierte Hochfrequenz- oder Basisband-Prüfsignale benötigt, die in Signalgeneratoren erzeugt werden. Je nach den Meßaufgaben und den zwischenzeitlich eingesetzten verschiedenartigsten digitalen Modulationsverfahren arbeiten solche Signalgeneratoren nach einem der nachfolgenden Signalaufbereitungsmethoden.

Bei der ersten Methode wird ein intern oder extern in einer Datenquelle erzeugter Modulationsdatenstrom in einem Modulationscoder durch Codierung und Mapping (Vorschrift, die jedem Modulationssymbol jeweils I- und Q-Werte in Abhängigkeit von der jeweiligen komplexen Modulationsart zuordnet) in I- und Q-Werte umgesetzt und dann dem nachfolgenden IQ-Modulator zugeführt, dessen Ausgangssignal dann auf die gewünschte Hochfrequenz umgesetzt wird (Vektor Signal Generator SMIQ der Firma Rohde & Schwarz, Datenblatt PD757.4582 und Auszug aus zugehörigem Handbuch 1084.80004.03, Seiten 2.78 bis 2.112). Als interne Datenquelle dient beispielsweise ein Speicher, aus dem die Daten ausgelesen werden. Es ist auch bekannt, über einen Signalprozessor aus gespeicherten Daten beliebige komplexe Datenfolgen zusammenzusetzen, beispielsweise sogenannte TDMA-Signale, wie sie für die globalen Mobilfunksysteme benutzt werden (siehe die verschiedenen möglichen digitalen Modulationsstandards, wie sie auf Seite 8 des Datenblattes des Signalgenerators SMIQ zusammengefaßt sind). Die so intern oder extern zusammengesetzten Datenfolgen können unmittelbar in Echtzeit verarbeitet werden. Sie können aber auch in einem Speicher zwischengespeichert und dann erst dem IQ-Modulator zugeführt werden.

Eine zweite Methode zur Signalaufbereitung besteht darin, die I- und Q-Werte zu berechnen und die so berechnete Folge von I/Q-Werten in einem Speicher für I und Q abzuspeichern, anschließend aus diesem Speicher die digitalen IQ-Werte auszulesen, in analoge Signale zu wandeln und gefiltert dann unmittelbar dem IQ-Modulator zuzuführen (zweikanaliger ARB-Generator, z.B. Modulationsgenerator AMIQ der Firma Rohde & Schwarz, Datenblatt PD 757.3970.12 und zugehörige Gerätebeschreibung 1110.3339.11, Seiten 4.1 bis 4.14). Diese zweite Methode eignet sich vor allem für solche Modulationsstandards, bei denen gleichzeitig eine Vielzahl von einzelnen Übertragungskanälen erzeugt werden, wie dies bei zahlreichen modernen Mobilfunknetzen inzwischen üblich ist. Beim sogenannten CDMA-Standard werden beispielsweise gleichzeitig über einen sogenannten Walsh-Code 64 Übertragungskanäle erzeugt (beispielsweise beschrieben in "North American Cellular CDMA",Hewlett-Packard-Journal, Dezember 1999, Seiten 90 bis 97), beim modernen W-CDMA-Verfahren (siehe Beschreibung Datenblatt AMIQ, Seite 9) werden sogar bis zu 512 einzelne Übertragungskanäle erzeugt, die gleichzeitig auf einem oder mehreren Trägern aufmoduliert werden. Diese zweite Methode hat jedoch den Nachteil, daß kein Echtzeitbetrieb möglich ist, d.h. es müssen vorberechnete Signale benutzt werden und es können keine vom Anwender zur Verfügung gestellte externe Daten benutzt werden. Die vorberechneten Daten müssen mit begrenzter Länge in einem Speicher abgespeichert werden und können deshalb nur durch aufeinanderfolgende mehrfache Wiederholung zu einer längeren Datenfolge zusammengesetzt werden. Es können daher nur eingeschränkt Messungen durchgeführt werden, bei denen es auf den Dateninhalt ankommt, wie dies beispielsweise zur sogenannten BER-Messung (Bit-Error-Rate) erforderlich ist (siehe Datenblatt AMIQ, Seite 5). Auch zur Synchronisation auf Daten höherer Layer (nach ISO Schichtenmodell) oder für Decodiertests ist für eine längere Datensequenz der richtige Dateninhalt erforderlich bzw. ist eine Echtzeitverarbeitung extern zur Verfügung gestellter Daten nötig.

Die nach der zweiten Methode arbeitenden Signalgeneratoren erzeugen also zwar komplexe Signale mit korrektem Spektrum und korrekter Signalstatistik, wegen der begrenzten Speicherlänge sind jedoch nur eingeschränkt Messungen durchführbar, bei denen es auf den richtigen Dateninhalt ankommt.

Andererseits sind die nach der ersten Methode arbeitenden Signalgeneratoren zwar für solche Messungen, bei denen es auf den richtigen Dateninhalt ankommt, geeignet, sie können jedoch nicht für Modulationsstandards benutzt werden, bei denen eine Vielzahl von Übertragungskanälen benutzt wird, da hierzu ein nicht mehr vertretbarer Aufwand nötig wäre und die Leistung üblicher Rechner hierfür nicht mehr ausreicht. Solche nach der ersten Methode arbeitende Signalgeneratoren werden daher bisher nur für die Messung von weniger, z.B. vier Kanälen benutzt (z.B. für BER-Messungen, Synchronisation auf Daten höherer Layer, Decodierungstests), die restlichen Kanäle, bei W-CDMA beispielsweise die restlichen 508 Nachbarkanäle, bleiben unbenutzt. Solche Messungen entsprechen damit nicht der Realität, da auch die Nachbarkanäle Einfluß auf das Meßergebnis haben. Auch ein Hinzufügen von Rauschen anstelle der Nachbarkanäle entspricht nicht der Wirklichkeit, da Rauschen nicht die nach der Norm geforderte Orthogonalität zwischen den Kanälen aufweist und daher die Empfangseigenschaften beeinflußt und dadurch die Meßergebnisse verfälscht werden.

Mit Signalgeneratoren, die nach der ersten Methode arbeiten, können also zwar Empfängermessungen in Echtzeit durchgeführt werden, die Bedingungen entsprechen jedoch nicht der Realität, da nur ein Teil der Kanäle belegt ist und die restlichen Kanäle fehlen.

Es ist daher Aufgabe der Erfindung, eine Anordnung zum Erzeugen eines digital modulierten Prüfsignals zu schaffen, das nach einem der üblichen digitalen Modulationsstandards mit einer Vielzahl von Übertragungskanälen erzeugt wird und mit dem aber trotzdem solche Messungen durchgeführt werden können, bei denen es auf den richtigen Dateninhalt ankommt.

Diese Aufgabe wird ausgehend von einer Anordnung laut Oberbegriff des Hauptanspruches durch dessen kennzeichnende Merkmale gelöst. Vorteilhafte Weiterbildungen ergeben sich aus den Unteransprüchen.

Zur Erzeugung eines Prüfsignals für Demultiplexer ist es an sich bekannt, einen zusammengesetzten seriellen Bitstrom durch Multiplexing zu erzeugen und dabei in den Bitstrom an vorbezeichneten Stellen Echtzeitinformationen einzubauen (US 5,812,558 B).

Eine erfindungsgemäße Anordnung vereinigt in sich die Vorteile der eingangs erwähnten beiden bekannten Methoden. Für Meßaufgaben, bei denen es auf den richtigen Dateninhalt ankommt (BER-Messungen, Synchronisation auf Daten höherer Layer, Decodierungstests u.dgl.) wird zwar nur ein Teil der insgesamt zur Verfügung stehenden Übertragungskanäle benutzt, die Nachbarkanäle sind jedoch ebenfalls mit realitätsnahen Daten beaufschlagt, allerdings mit nur berechneten und aus einem Speicher mit einer begrenzten Speicherlänge ausgelesenen Daten, was jedoch ausreicht, um ein insgesamt der Wirklichkeit entsprechendes Prüfsignal zu erzeugen. Damit werden unverfälschte Meßergebnisse erreicht. Die Signale, die nach den beiden unterschiedlichen Methoden erzeugt werden, werden synchron und im richtigen Zeitbezug zueinander addiert, d.h. der Takt, mit dem die nach der ersten Methode vorzugsweise in Echtzeit erzeugten IQ-Werte dem IQ-Modulator zugeführt werden, wird gleich dem Takt gewählt, mit dem die nach der zweiten Methode durch Berechnung gewonnenen IQ-Werte aus dem Speicher ausgelesen werden. Damit ist gewährleistet, daß die geforderte Orthogonalität zwischen den einzelnen Kanälen unbeeinträchtigt bleibt.

Die Datenfolge für die eigentlichen Meßkanäle nach der ersten Methode kann in bekannter Weise unmittelbar aus einer internen oder externen Datenquelle zugeführt werden, für eine interne Datenquelle dient beispielsweise im einfachsten Fall wieder ein Speicher, der mit der vorberechneten Modulationsdatenfolge gefüllt wird. Aus diesen ausgelesenen Daten wird dann in bekannter Weise durch Coding und Mapping im Modulationscoder das eigentliche I/Q-Signal erzeugt und dem IQ-Modulator zugeführt. Die Modulationsdatenfolge nach der ersten Methode kann über einen geeigneten Signalprozessor auch in bekannter Weise aus Einzelteilen zusammengesetzt werden, die entweder in einem Speicher abgespeichert sind oder in Echtzeit berechnet werden. Damit ist auch aus internen Daten in Echtzeit eine Messung durchführbar. Wenn die Daten für die erste Methode intern in einem Speicher abgespeichert sind, können für diesen Speicher und den für die Methode zwei benutzten Speicher jeweils unterschiedliche Periodenlängen gewählt werden, beispielsweise in Form von Primzahlen. Daraus ergibt sich eine wesentlich längere Gesamtperiode (kleinstes gemeinsames Vielfaches der Einzeleigenschaften) und somit noch realitätsnähere Signale, d.h. das Testsignal wiederholt sich nicht so oft und entspricht daher noch mehr der Realität.

Die Erfindung wird im Folgenden anhand einer schematischen Zeichnung an einem Ausführungsbeispiel näher erläutert.

Die Figur zeigt das Prinzipschaltbild einer erfindungsgemäßen Anordnung, bestehend aus einem Modulationscoder, der nach der eingangs beschriebenen ersten Methode arbeitet, und einem Modulationsgenerator, der nach der eingangs beschriebenen zweiten Methode arbeitet. Der Modulationscoder ist beispielsweise ähnlich aufgebaut wie der Vektorsignalgenerator SMIQ der Firma Rohde & Schwarz, auch der Modulationsgenerator mit seinem internen Speicher ist von bekannter Bauart. Die durch Rechnung gewonnenen IQ-Werte aus dem Modulationsgenerator werden über eine Verzögerungseinheit den Addierstufen des Modulationscoders zugeführt und die IQ-Werte des Modulationscoders werden also mit den IQ-Werten des Modulationsgenerators im richtigen Zeitbezug zueinander addiert, dann analog gewandelt und schließlich dem eigentlichen IQ-Modulator zugeführt, in welchem sie dem eigentlichen Trägersignal aufmoduliert werden. Die Speicher des Modulationsgenerators und des Modulationscoders sind über einen gemeinsamen Taktgenerator angesteuert, die IQ-Werte werden also taktsynchron ausgelesen.

## Patentansprüche

1. Signalgenerator zum Erzeugen eines digital modulierten Prüfsignals für das Testen von Kommunikationssystemen, das gemäß einem vorbestimmten digitalen Modulationsstandard, insbesondere gemäß dem CDMA-Verfahren, aus einer Vielzahl von jeweils durch eine Folge von I- und Q-Werten repräsentierten Übertragungskanälen besteht,
**gekennzeichnet durch**,
einen Modulations-Coder, in welchem unmittelbar aus einem intern oder extern in einer Datenquelle erzeugten Modulations-Datenstrom gemäß dem gewählten Modulationsstandard **durch** Codierung und Mapping ein erster Teil der insgesamt zur Verfügung stehenden Übertragungskanäle erzeugt wird (Figur; 1. Methode), und einen Modulations-Generator, in welchem aus einem dort in einem ersten Speicher abgespeicherten, vorberechneten Modulations-Datenstrom begrenzter Länge ein zweiter Teil der insgesamt zur Verfügung stehenden Übertragungskanäle erzeugt wird (Figur; 2 . Methode),
wobei die im Modulations-Coder und Modulations-Generator erzeugten, die Übertragungskanäle repräsentierenden I- und Q-Werte in einer Addierstufe zu dem Prüfsignal addiert werden.

2. Signalgenerator nach Anspruch 1,
**dadurch gekennzeichnet,**
**daß** die addierten I- und Q-Werte einem Digital/AnalogWandler und dann einem I/Q-Modulator zugeführt werden.

3. Signalgenerator nach Anspruch 1 oder 2,
**dadurch gekennzeichnet,**
**daß** die Addition der I- und Q-Werte taktsynchron und zeitgleich erfolgt.

4. Signalgenerator nach einem der vorhergehenden Ansprüche,
**dadurch gekennzeichnet,**
**daß** die von dem Modulations-Coder erzeugten I- und Q-Werte in einem zweiten Speicher zwischengespeichert werden und der erste und zweite Speicher unterschiedliche Speicherlängen aufweisen.

5. Signalgenerator nach einem der vorhergehenden Ansprüche,
**dadurch gekennzeichnet,**
**daß** die I- und Q-Werte des Modulations-Generators über eine einstellbare Verzögerungseinheit der Addierstufe zugeführt werden.

6. Signalgenerator nach einem der vorhergehenden Ansprüche,
**dadurch gekennzeichnet,**
**daß** die Übertragungskanäle im Modulations-Coder unmittelbar in Echtzeit aus einem intern oder extern erzeugten Modulations-Datenstrom erzeugt werden.

## Claims

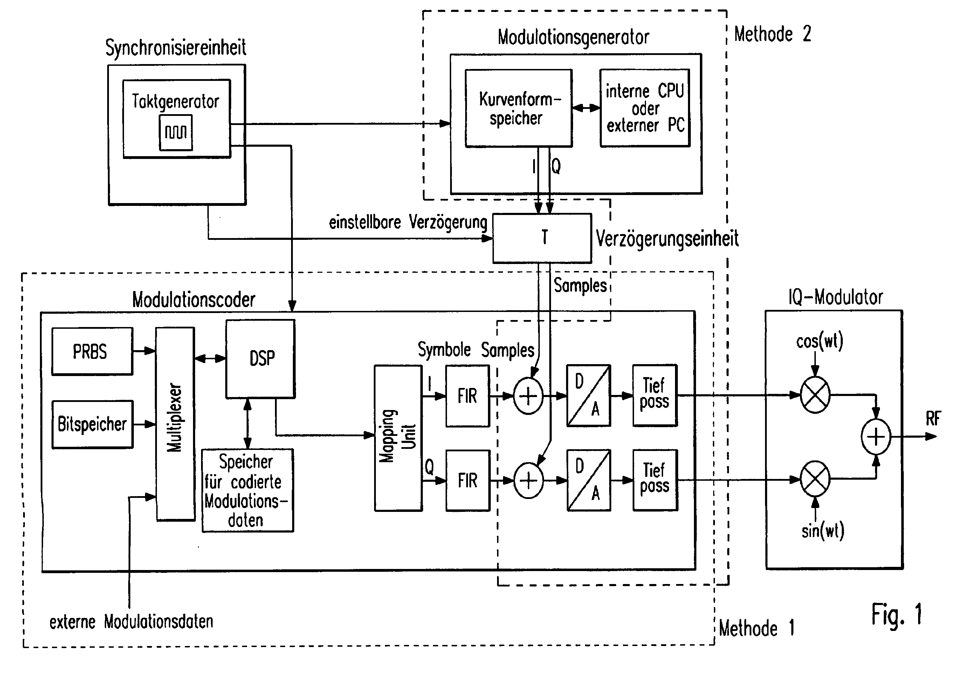

1. Signal generator for generating a digitally modulated test signal for testing communications systems which, according to a predetermined digital modulation standard, and in particular according to the CDMA method, consists of a large number of transmission channels each represented by a sequence of I and Q values, **characterized by** a modulation coder in which a first proportion of the total number of transmission channels available is generated by coding and mapping, according to the selected modulation standard, directly from a modulation data stream generated internally or externally in a data source (Figure 1: lst Method), and a modulation generator in which a second proportion of the total number of transmission channels available is generated from a precalculated modulation data stream of limited length which is stored there in a first memory (Figure 1: 2nd Method), the I and Q values generated in the modulation coder and modulation generator, representing the transmission channels, being added in an adding stage to give the test signal.

2. Signal generator according to Claim 1, **characterized in that** the added I and Q values are fed to a digital/analogue converter and then to an I/Q modulator.

3. Signal generator according to Claim 1 or 2, **characterized in that** the addition of the I and Q values takes place synchronously with a clock signal and in synchronization.

4. Signal generator according to any one of the preceding claims, **characterized in that** the I and Q values generated by the modulation coder are buffer-stored in a second memory and the first and second memories have different storage lengths.

5. Signal generator according to any one of the preceding claims, **characterized in that** the I and Q values from the modulation generator are fed to the adding stage via an adjustable delay unit.

6. Signal generator according to any one of the preceding claims, **characterized in that** the transmission channels are generated in the modulation coder directly from an internally or externally generated modulation data stream in real time.

## Revendications

1. Générateur de signaux pour générer un signal de contrôle modulé numériquement pour l'essai de systèmes de communication, qui est constitué d'une pluralité de canaux de transmission représentés respectivement par une suite de valeurs I et Q conformément à un standard de modulation numérique prédéterminé, en particulier conformément au procédé CDMA,
**caractérisé par**
un codeur de modulation, dans lequel une première partie de l'ensemble des canaux de transmission disponibles est générée immédiatement à partir d'un flux de données de modulation interne ou externe généré dans une source de données conformément au standard de modulation choisi par codage et mappage (Figure ; 1. Procédé), et un générateur de modulation, dans lequel une seconde partie de l'ensemble des canaux de transmission disponibles est générée à partir d'un flux de données de modulation de longueur limitée précalculé mémorisé dans une première mémoire (Figure ; 2. Procédé),
dans lequel les valeurs I et Q représentant les canaux de transmission générés dans le codeur de modulation et le générateur de modulation sont ajoutées lors d'une étape d'addition au signal de contrôle.

2. Générateur de signaux selon la revendication 1, **caractérisé en ce que** les valeurs I et Q ajoutées sont transmises à un convertisseur numérique/analogique et ensuite à un modulateur I/Q.

3. Générateur de signaux selon la revendication 1 ou 2, **caractérisé en ce que** l'addition des valeurs I et Q se produit simultanément et de façon synchronisée.

4. Générateur de signaux selon l'une des revendications précédentes, **caractérisé en ce que** les valeurs I et Q générées par le codeur de modulation sont mémorisées dans une seconde mémoire et les première et seconde mémoires présentent des tailles de mémoire différentes.

5. Générateur de signaux selon l'une des revendications précédentes, **caractérisé en ce que** les valeurs I et Q du générateur de modulation sont transmises par l'intermédiaire d'une unité de retard réglable de l'étape d'addition.

6. Générateur de signaux selon l'une des revendications précédentes, **caractérisé en ce que** les canaux de transmission sont générés dans le codeur de modulation immédiatement en temps réel à partir d'un flux de données de modulation généré intérieurement ou extérieurement.
